# FASCICULE DE BREVET EUROPEEN

(11) **EP 2 798 426 B1**
(45) Date de publication et mention de la délivrance du brevet: **06.04.2016**
(21) Numéro de dépôt: 12821281.8
(22) Date de dépôt: 20.12.2012
(51) Int. Cl.: G05G 5/03

(54) **DISPOSITIF DE COMMANDE À RETOUR HAPTIQUE**
STEUEREINRICHTUNG MIT HAPTISCHEN RÜCKINFORMATION.
CONTROL DEVICE WITH HAPTIC FEEDBACK

(30) Priorité: 30.12.2011 FR 1104150
(43) Date de publication de la demande: 05.11.2014
(73) Titulaire: DAV, 94046 Creteil Cedex (FR)
(72) Inventeur: AUBRY, Anthony, F-94046 Créteil CEDEX (FR)
(74) Mandataire: Pothmann, Karsten
(86) Numéro de dépôt international: PCT/FR2012/000545
(87) Numéro de publication internationale: WO 2013/098492

(56) Documents cités:
- EP-A2- 2 187 293
- US-A1- 2004 164 971
- US-A1- 2008 084 384
- US-A1- 2010 156 818
- US-A1- 2010 308 982
- US-A1- 2011 141 052

## Description

La présente invention concerne un dispositif de commande dans le domaine des véhicules automobiles, pouvant notamment transmettre un retour haptique à un utilisateur, tel qu'un retour vibratoire.

Dans le domaine automobile, des dispositifs de commandes multifonctions, réalisés par exemple sous forme d'un joystick ou d'un bouton rotatif, sont de plus en plus utilisés pour commander des systèmes électriques ou électroniques, tels qu'un système de climatisation, un système audio ou encore un système de navigation.

De tels dispositifs peuvent être associés à un écran d'affichage et permettre une navigation dans des menus déroulants comportant différentes commandes relatives aux systèmes à commander.

Pour augmenter le confort ergonomique, l'utilisation d'une technologie à capteur de surface sensitive, telle que les dalles tactiles, au niveau de la surface de commande de tels dispositifs de commande est de plus en plus courante.

Lorsqu'un utilisateur exerce une pression ou touche simplement la surface tactile, il est possible au capteur de mesurer la pression appliquée et/ou de déterminer la localisation de la pression par application d'une tension électrique adaptée. Dans ce cas, un appui de l'utilisateur sur la surface tactile est par exemple associé à la sélection d'une commande.

En outre, pour signaler à un utilisateur que sa commande a bien été prise en compte, notamment en conduite de nuit ou lors d'une manipulation en aveugle, il est important que l'utilisateur ait un retour haptique de manière à rester concentré sur la route.

Pour cela, on connait déjà des dispositifs de commandes à retour haptique comportant des actionneurs, tels que des actionneurs électromagnétiques, reliés à une plaque de support du capteur à surface tactile du dispositif de commande pour transmettre un mouvement de vibration à la surface tactile, de manière que l'utilisateur perçoive un retour haptique l'informant que sa commande a bien été prise en compte.

Néanmoins, dans un souci d'économie, il est de plus en plus courant de n'utiliser qu'un seul actionneur afin de transmettre le retour haptique à l'utilisateur. Cela pose ainsi un souci de transmission du retour haptique sur toute la surface du dispositif de commande. En effet plus le point de contact de l'utilisateur avec le dispositif de commande est éloigné de l'emplacement de l'actionneur, plus le retour haptique est atténué.

Un des buts de l'invention est donc de remédier au moins partiellement aux inconvénients de l'art antérieur et de proposer un dispositif de commande à retour haptique économique et optimisé.

L'invention concerne donc un dispositif de commande à retour haptique comprenant une surface de commande sensitive sur laquelle est fixé un actionneur, ladite surface de commande étant reliée à un support au niveau d'au moins deux zones de liaison, chaque zone de liaison comprenant au moins un amortisseur placé entre la surface de commande et le support, lesdites zones de liaisons définissant, une suspension proximal de ladite surface de commande par rapport audit support au niveau d'une zone de liaison proche de l'actionneur et une suspension distale de ladite surface de commande par rapport au support au niveau d'une zone de liaison éloignée de l'actionneur, tel que décrit dans le document US-A1-2008/0084384, la raideur de la suspension proximale étant inférieure à la raideur de la suspension distale.

Selon un aspect de l'invention, plus la distance entre une zone de liaison et l'actionneur est grande, plus le coefficient de raideur du au moins un amortisseur de ladite zone de liaison est grand.

Selon un autre aspect de l'invention, la surface de commande s'étend sur une longueur et au moins deux zones de liaison s'étendent sur toute ladite longueur, chaque zone de liaison comportant un seul amortisseur s'étendant sur toute la longueur et plus la distance entre un point d'une zone de liaison et l'actionneur est grande, plus l'épaisseur de l'amortisseur, audit point de cette zone de liaison, est faible.

Selon un autre aspect de l'invention, les amortisseurs des zones de liaison ont un coefficient de raideur identique et que plus la distance entre une zone de liaison et l'actionneur est grande, plus l'épaisseur du au moins un amortisseur de cette zone de liaison est faible.

Selon un autre aspect de l'invention, les amortisseurs des zones de liaison ont un coefficient de raideur identique et que plus la distance entre une zone de liaison et l'actionneur est grande, plus le serrage de la surface de commande contre le support au niveau de ladite zone de liaison est important.

Selon un autre aspect de l'invention, les amortisseurs des zones de liaison ont un coefficient de raideur identique et que plus la distance entre une zone de liaison et l'actionneur est grande, plus le nombre d'amortisseurs présent dans ladite zone de liaison est grand.

Selon un autre aspect de l'invention, le ou les amortisseurs sont en matériaux compressibles de type silicone ou mousse.

Selon un autre aspect de l'invention, la surface de commande est une dalle tactile transparente.

D'autres caractéristiques et avantages de l'invention ressortiront de la description suivante, donnée à titre d'exemple, sans caractère limitatif, et en regard des dessins annexés parmi lesquels :
- la figure 1 montre une représentation schématique d'un dispositif de commande en vue de dessus,
- la figure 2 montre une représentation schématique d'un dispositif de commande en vue de côté selon la coupe AA,
- la figure 3 montre une représentation schématique d'un dispositif de commande en vue de dessus selon un mode de réalisation alternatif,
- la figure 4 montre une représentation schématique d'un dispositif de commande selon le mode de réalisation de la figure précédente, en vue de côté selon la coupe BB,
- la figure 5 montre une représentation schématique d'un dispositif de commande selon un autre mode de réalisation, en vue de côté selon la coupe AA,
- la figure 6 montre une représentation schématique d'un dispositif de commande en vue de dessus selon un mode de réalisation supplémentaire.

Les éléments identiques sur les différentes figures, portent des références similaires.

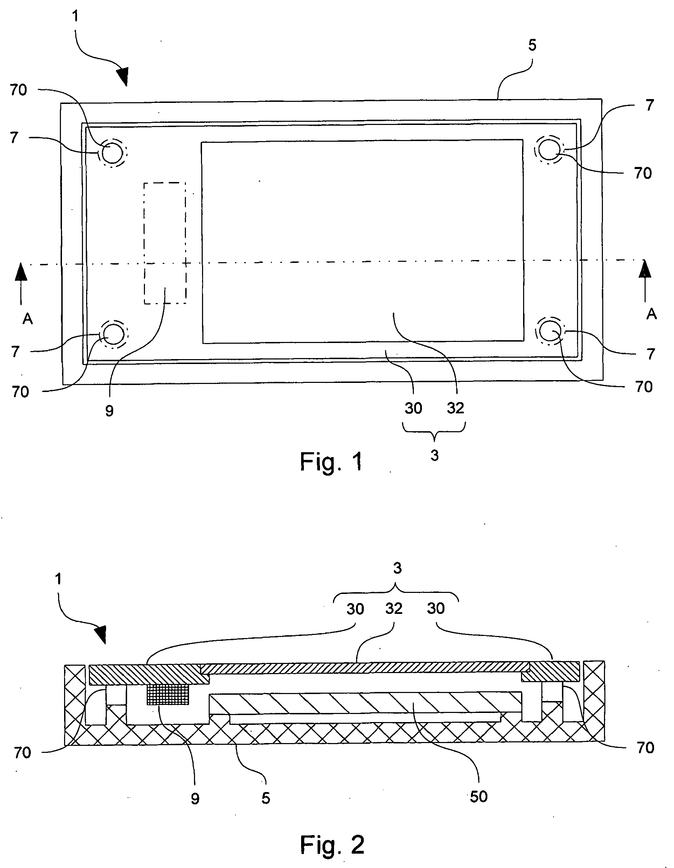

Comme le montrent la figure 1 en vue de dessus et la figure 2 en vue de coté selon la coupe AA, le dispositif de commande 1 à retour haptique comporte une surface de commande 3 sensitive sur laquelle est fixé un actionneur 9. La surface de commande 3 est fixée à un support 5 au niveau d'au moins deux zones de liaison 7, par exemple par collage ou alors au moyen de vis ou clips. Lesdites au moins deux zones de liaisons 7 comprennent chacune au moins un amortisseur 70 placé entre la surface de commande 3 et le support 5.

Lesdites zones de liaison 7 avec les amortisseurs 70, définissent ainsi la suspension de la surface de commande 3 par rapport au support 5. La ou les zones de liaison 7 proches de l'actionneur 9 définissent ainsi une suspension proximale et la ou les zones de liaison 7 les plus éloignées de l'actionneur 9 définissent une suspension distale. Afin que le retour haptique engendré par l'actionneur 9 se transmette sur toute la surface de commande 3, la raideur de la suspension proximale de ladite surface de commande 3 sur le support 5 est inférieure à la raideur de sa suspension distale.

Le retour haptique délivré par l'actionneur 9, par exemple des vibrations perpendiculaires à la dalle tactile 32, est transmis sur toute la surface de la surface de commande 3. Le fait que la suspension distale soit plus raide que la suspension proximale permet une amplification desdites vibrations au niveau des zones de liaison 7 les plus éloignées de l'actionneur 9. Cette amplification permet ainsi de compenser l'atténuation naturelle des vibrations du fait de la distance parcourue au sein de la surface de commande 3 depuis l'actionneur 9. Néanmoins, il est impératif de bien calibrer la raideur de la suspension proximale en fonction de la masse de la surface de commande 3, afin qu'elle puisse transmettre efficacement les vibrations de l'actionneur 9, et ce pour un ressenti optimum du retour haptique par l'utilisateur.

Préférentiellement, les amortisseurs 70 sont en matériaux compressibles de type silicone ou mousse.

Dans le mode de réalisation présenté par ces figures 1 et 2, la surface de commande 3 est une dalle tactile 32 transparente rectangulaire, pouvant aussi bien être résistive ou capacitive, encadrée par un cadre support 30 sur lequel est fixé l'actionneur 9. Le fait de fixer directement l'actionneur 9 sur le cadre support 30, peut également permettre un gain de place. La dalle tactile 32 transparente surplombe un écran d'affichage, par exemple un écran à cristaux liquides à transistors en couche mince (TFT) ou même à diode électroluminescentes (LED), et est fixée sur le support 5 au niveau de quatre zones de liaison 7 situées aux quatre coins du cadre support 30.

Dans ce mode de réalisation, afin d'avoir une suspension distale plus raide que la suspension proximale, le coefficient de raideur des amortisseurs 70 situés au niveau des zones de liaison 7 les plus proches de l'actionneur 9, définissant la raideur de la suspension proximale, est plus faible que le coefficient de raideur des amortisseurs 70 situés au niveau des zones de liaison 7 les plus éloignées de l'actionneur 9, définissant la raideur de la suspension distale. Ainsi, plus la distance entre une zone de liaison 7 et l'actionneur 9 est grande, plus le coefficient de raideur du ou des amortisseurs 70 de cette zone de liaison 7 est important.

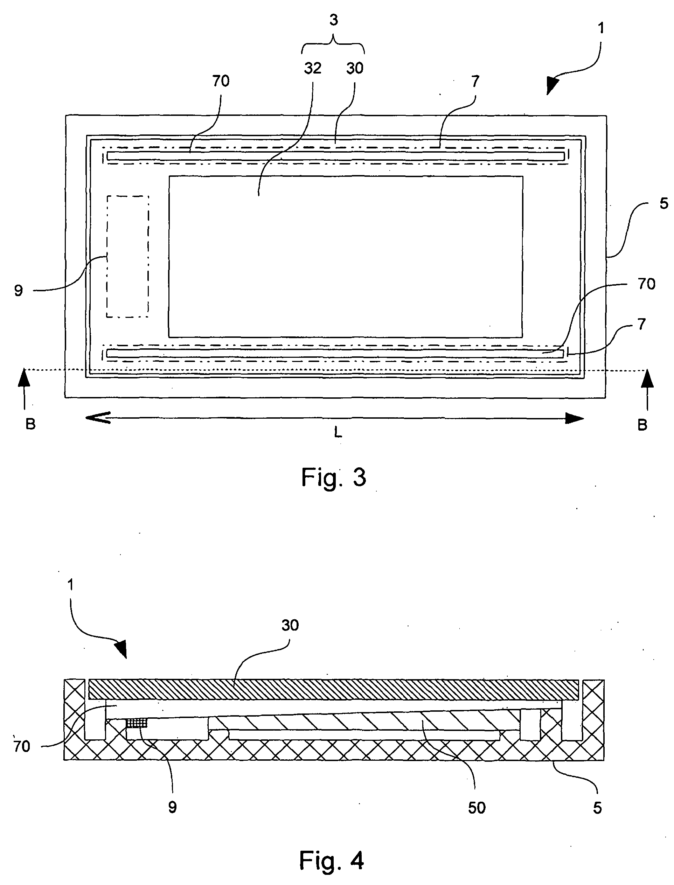

La figure 3 en vue de dessus et la figure 4 en vue de coté selon la coupe BB, montrent un mode de réalisation alternatif d'un dispositif de commande 1 selon l'invention. Dans ce mode de réalisation, la surface de commande 3, pouvant également comporter une dalle tactile 32 encadrée dans un cadre support 30, s'étend sur une longueur L. Ladite surface de commande 3 est reliée au support 5 au niveau de deux zones de liaison 7 qui s'étendent elles aussi sur la longueur L de la surface de commande 3.

Afin que la raideur de la suspension proximale soit inférieure à la raideur de la suspension distale, les deux zones de liaison 7 présentent chacune un amortisseur 70 dont l'épaisseur et donc la raideur varie, en fonction de la distance avec l'actionneur 9. Ainsi, plus la distance entre un point d'une zone de liaison 7 et l'actionneur 9 est grande, plus l'épaisseur de l'amortisseur 9, audit point, est faible.

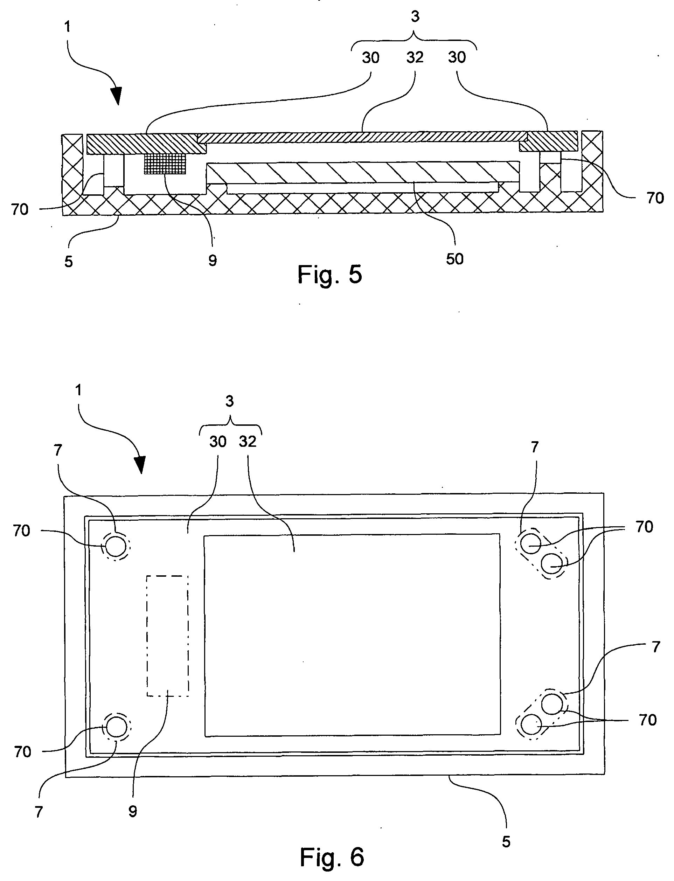

La figure 5 montre, en vue de coté selon la coupe AA de la figure 1, un autre mode de réalisation dans lequel tous les amortisseurs 70, quelles que soient les zones de liaison 7 dans lesquelles ils sont situées, ont un coefficient de raideur identique. Afin que la suspension proximale soit plus faible que la suspension distale, plus la distance entre une zone de liaison 7 et l'actionneur 9 est grande, plus l'épaisseur de l'amortisseur 70 dans cette zone de liaison 7 est faible. Ainsi, le ou les amortisseurs 70 des zones de liaison 7 éloignées de l'actionneur 9 sont moins épais que le ou les amortisseurs 70 des zones de liaison 7 proches de l'actionneur 9.

Un mode de réalisation supplémentaire (non représenté), dans le cas où les amortisseurs 70 ont un coefficient de raideur similaire, est de faire varier le serrage de la surface de commande 3 contre le support 5 au niveau des zones de liaison 7. Ainsi, plus la distance entre une zone de liaison 7 et l'actionneur 9 est grande, plus le serrage de la surface de commande 3 sur le support 5 est important, augmentant de fait la raideur de la suspension au niveau de cette zone de liaison 7. En effet, dans le cas ou la surface de commande 3 est fixée au support 5 par vissage ou clipsage, un serrage plus important entre ces deux éléments entraine une compression plus importante de l'amortisseur 70 et donc augmente de fait sa raideur. On peut ainsi envisager un serrage entrainant une compression des amortisseurs 70 de l'ordre de 10% de l'épaisseur totale, au niveau des zones de liaison 7 porches de l'actionneur 9 et de l'ordre de 30% de l'épaisseur totale, au niveau des zones de liaison 7 éloignées de l'actionneur 9.

La figure 6 montre un autre mode de réalisation d'un dispositif de commande 1 où la raideur de la suspension proximale est inférieure à la raideur de la suspension distale. Dans ce mode de réalisation, les amortisseurs 70 ont également un coefficient de raideur similaire, cependant plus la distance entre une zone de liaison 7 et l'actionneur (9) est grande, plus le nombre d'amortisseurs 70 présent dans ladite zone de liaison 7 est grand. Ainsi, comme dans l'exemple montré par la figure 6, les zones de liaison 7 proches de l'actionneur 9 peuvent ne comporter qu'un seul amortisseur 70 tandis que les zones de liaison 7 éloignées de l'actionneur 9 comportent deux amortisseurs 70.

Bien évidement, il est tout à fait possible d'appliquer les modes de réalisation présentés ci-dessus pour d'autres types de surface de commande 3 qu'une dalle tactile 32 transparente. Cela peut notamment être appliqué dans le cas de d'une zone de commande sensitive de façade de commande, par exemple de type interrupteur sensitif ou interrupteur de pression, ou bien encore dans le cas d'un pavé tactile.

On voit donc ainsi que grâce à une modulation de la raideur de suspension de la surface de commande 3, il est possible d'optimiser la transmission du retour haptique sur toute la surface de ladite surface de commande 3 et ce malgré le fait qu'il n'y ait qu'un seul actionneur 9.

## Revendications

1. Dispositif de commande (1) à retour haptique comprenant une surface de commande (3) sensitive sur laquelle est fixé un actionneur (9), ladite surface de commande (3) étant reliée à un support (5) au niveau d'au moins deux zones de liaison (7), chaque zone de liaison (7) comprenant au moins un amortisseur (70) placé entre la surface de commande (3) et le support (5), lesdites zones de liaisons (7) définissant, une suspension proximale de ladite surface de commande (3) par rapport audit support (5) au niveau d'une zone de liaison (7) proche de l'actionneur (9) et une suspension distale de ladite surface de commande (3) par rapport au support (5) au niveau d'une zone de liaison (7) éloignée de l'actionneur, **caractérisé en ce que** la raideur de la suspension proximale est inférieure à la raideur de la suspension distale.

2. Dispositif de commande (1) selon la revendication précédente, **caractérisé en ce que** plus la distance entre une zone de liaison (7) et l'actionneur (9) est grande, plus le coefficient de raideur du au moins un amortisseur (70) de ladite zone de liaison (7) est grand.

3. Dispositif de commande (1) selon la revendication 1, **caractérisé en ce que** la surface de commande (3) s'étend sur une longueur (L) et qu'au moins deux zones de liaison (7) s'étendent sur toute ladite longueur (L), chaque zone de liaison (7) comportant un seul amortisseur (70) s'étendant sur toute la longueur (L) et que plus la distance entre un point d'une zone de liaison (7) et l'actionneur (9) est grande, plus l'épaisseur de l'amortisseur (70), audit point de cette zone de liaison (7), est faible.

4. Dispositif de commande (1) selon la revendication 1, **caractérisé en ce que** les amortisseurs (70) des zones de liaison (7) ont un coefficient de raideur identique et que plus la distance entre une zone de liaison (7) et l'actionneur (9) est grande, plus l'épaisseur du au moins un amortisseur (70) de cette zone de liaison (7) est faible.

5. Dispositif de commande (1) selon la revendication 1, **caractérisé en ce que** les amortisseurs (70) des zones de liaison (7) ont un coefficient de raideur identique et que plus la distance entre une zone de liaison (7) et l'actionneur (9) est grande, plus le serrage de la surface de commande (3) contre le support (5) au niveau de ladite zone de liaison (7) est important.

6. Dispositif de commande (1) selon la revendication 1, **caractérisé en ce que** les amortisseurs (70) des zones de liaison (7) ont un coefficient de raideur identique et que plus la distance entre une zone de liaison (7) et l'actionneur (9) est grande, plus le nombre d'amortisseurs (70) présent dans ladite zone de liaison (7) est grand.

7. Dispositif de commande (1) selon l'une des revendications précédentes, **caractérisé en ce que** les amortisseurs (70) sont en matériaux compressibles de type silicone ou mousse.

8. Dispositif de commande (1) selon l'une des revendications précédentes, **caractérisé en ce que** la surface de commande (3) est une dalle tactile transparente.

## Patentansprüche

1. Steuereinrichtung (1) mit haptischer Rückkopplung, umfassend eine berührungsempfindliche Bedienfläche (3), auf der ein Aktuator (9) befestigt ist, wobei die Bedienfläche (3) mit einem Träger (5) an mindestens zwei Verbindungsbereichen (7) verbunden ist, wobei jeder Verbindungsbereich (7) mindestens einem Dämpfer (70) aufweist, der zwischen der Bedienfläche (3) und dem Träger (5) angeordnet ist, wobei die Verbindungsbereiche (7) eine proximale Aufhängung der Bedienfläche (3) relativ zu dem Träger (5) an einem Verbindungsbereich (7), der nahe des Aktuators (9) ist, und eine distale Aufhängung der Bedienfläche (3) relativ zu dem Träger (5) an einem Verbindungsbereich (7) definieren, der von dem Aktuator entfernt ist, **dadurch gekennzeichnet, dass** die Steifigkeit der proximalen Aufhängung niedriger als die Steifigkeit der distalen Aufhängung ist.

2. Steuereinrichtung (1) nach dem vorhergehenden Anspruch, **dadurch gekennzeichnet, dass**, je größer der Abstand zwischen einem Verbindungsbereich (7) und dem Aktuator (9) ist, desto größer der Steifigkeitskoeffizient des mindestens einen Dämpfers (70) des Verbindungsbereiches (7) ist.

3. Steuereinrichtung (1) nach Anspruch 1, **dadurch gekennzeichnet, dass** sich die Bedienfläche (3) auf einer Länge (L) erstreckt und dass sich mindestens zwei Verbindungsbereiche (7) auf der gesamten Länge (L) erstrecken, wobei jeder Verbindungsbereich (7) einen einzigen Dämpfer (70) aufweist, der sich auf der gesamten Länge (L) erstreckt, und dass, je größer der Abstand zwischen einem Punkt eines Verbindungsbereiches (7) und dem Aktuator (9) ist, desto geringer die Dicke des Dämpfers (70) an dem Punkt dieses Verbindungsbereiches (7) ist.

4. Steuereinrichtung (1) nach Anspruch 1, **dadurch gekennzeichnet, dass** die Dämpfer (70) der Verbindungsbereiche (7) einen identischen Steifigkeitskoeffizienten aufweisen und dass, je größer der Abstand zwischen einem Verbindungsbereich (7) und dem Aktuator (9) ist, desto geringer die Dicke des mindestens einen Dämpfers (70) dieses Verbindungsbereiches (7) ist.

5. Steuereinrichtung (1) nach Anspruch 1, **dadurch gekennzeichnet, dass** die Dämpfer (70) der Verbindungsbereiche (7) einen identischen Steifigkeitskoeffizienten aufweisen und dass, je größer der Abstand zwischen einem Verbindungsbereich (7) und dem Aktuator (9) ist, desto mehr die Bedienfläche (3) gegen den Träger (5) an dem Verbindungsbereich (7) geklemmt ist.

6. Steuereinrichtung (1) nach Anspruch 1, **dadurch gekennzeichnet, dass** die Dämpfer (70) der Verbindungsbereiche (7) einen identischen Steifigkeitskoeffizienten aufweisen und dass, je größer der Abstand zwischen einem Verbindungsbereich (7) und dem Aktuator (9) ist, desto größer die Anzahl der Dämpfer (70) ist, die in diesem Verbindungsbereich (7) vorhanden sind.

7. Steuereinrichtung (1) nach einem der vorhergehenden Ansprüche, **dadurch gekennzeichnet, dass** die Dämpfer (70) aus komprimierbaren Materialien wie Silikon oder Schaumstoff sind.

8. Steuereinrichtung (1) nach einem der vorhergehenden Ansprüche, **dadurch gekennzeichnet, dass** die Bedienfläche (3) ein durchsichtiger Berührungsschirm ist.

## Claims

1. Control device (1) with haptic feedback comprising a sensitive control surface (3) to which an actuator (9) is fixed, said control surface (3) being connected to a support (5) in at least two connecting areas (7), each connecting area (7) comprising at least one damper (70) placed between the control surface (3) and the support (5), said connecting areas (7) defining a proximal suspension of said control surface (3) on said support (5) in one connecting area (7) near the actuator (9) and a distal suspension of said control surface (3) on the support (5) in a connecting area (7) at a distance from the actuator, **characterized in that** the stiffness of the proximal suspension is less than the stiffness of the distal suspension.

2. Control device (1) according to the preceding claim, **characterized in that**, as the distance between a connecting area (7) and the actuator (9) increases, the coefficient of stiffness of the at least one damper (70) of said connecting area (7) also increases.

3. Control device (1) according to Claim 1, **characterized in that** the control surface (3) extends over a length (L), **in that** at least two connecting areas (7) extend over the whole of said length (L), each connecting area (7) including a single damper (70) extending over the whole length (L), and **in that** as the distance between a point of a connecting area (7) and the actuator (9) increases, the thickness of the damper (70) at said point of this connecting area (7) decreases.

4. Control device (1) according to Claim 1, **characterized in that** the dampers (70) of the connecting areas (7) have an identical coefficient of stiffness, and **in that**, as the distance between a connecting area (7) and the actuator (9) increases, the thickness of the at least one damper (70) of this connecting area (7) decreases.

5. Control device (1) according to Claim 1, **characterized in that** the dampers (70) of the connecting areas (7) have an identical coefficient of stiffness, and **in that**, as the distance between a connecting area (7) and the actuator (9) increases, the closeness of the joint between the control surface (3) and the support (5) in said connecting area (7) also increases.

6. Control device (1) according to Claim 1, **characterized in that** the dampers (70) of the connecting areas (7) have an identical coefficient of stiffness, and **in that**, as the distance between a connecting area (7) and the actuator (9) increases, the number of dampers (70) present in said connecting area (7) also increases.

7. Control device (1) according to any of the preceding claims, **characterized in that** the dampers (70) are made of compressible materials such as silicone or foam material.

8. Control device (1) according to any of the preceding claims, **characterized in that** the control surface (3) is a transparent touch panel.
